(19) Europäisches Patentamt
European Patent Office
Office européen des brevets

(11) **EP 2 417 171 B1**

(12) **EUROPEAN PATENT SPECIFICATION**

(45) Date of publication and mention of the grant of the patent:
**24.01.2018 Bulletin 2018/04**

(21) Application number: **10713780.4**

(22) Date of filing: **09.04.2010**

(51) Int Cl.:
***C08F 292/00*** *(2006.01)* ***C08F 293/00*** *(2006.01)*
***C08L 51/10*** *(2006.01)* ***C08K 9/08*** *(2006.01)*
***C08L 63/00*** *(2006.01)* ***H01B 3/40*** *(2006.01)*
***C08J 5/00*** *(2006.01)* ***B82B 3/00*** *(2006.01)*

(86) International application number:
**PCT/US2010/030561**

(87) International publication number:
**WO 2010/118336 (14.10.2010 Gazette 2010/41)**

(54) **DIBLOCK COPOLYMER MODIFIED NANOPARTICLE-POLYMER NANOCOMPOSITES FOR ELECTRICAL INSULATION**

NANOVERBUNDWERKSTOFFE AUS DIBLOCKCOPOLYMERMODIFIZIERTEN NANOPARTIKELN UND POLYMER FÜR DIE ELEKTRISCHE ISOLIERUNG

NANOCOMPOSITES NANOPARTICULE-POLYMÈRE MODIFIÉES PAR UN COPOLYMÈRE DIBLOC POUR L'ISOLATION ÉLECTRIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.04.2009 US 212409 P**

(43) Date of publication of application:
**15.02.2012 Bulletin 2012/07**

(73) Proprietor: **Rensselaer Polytechnic Institute**
**Troy, NY 12180 (US)**

(72) Inventors:
- **SCHADLER, Linda**
  **Niskayuna**
  **NY 12309 (US)**
- **HILLBORG, Henrik**
  **S-72210 Vasteras (SE)**
- **BENICEWICZ, Brian**
  **Columbia**
  **SC 29201 (US)**
- **ZHAO, Su**
  **S-72335 Vasteras (SE)**

(74) Representative: **Lippert Stachow Patentanwälte Rechtsanwälte**
**Partnerschaft mbB**
**Krenkelstrasse 3**
**01309 Dresden (DE)**

(56) References cited:
**EP-A1- 1 911 784**

- **LI C ET AL: "SYNTHESIS OF WELL-DEFINED POLYMER BRUSHES GRAFTED ONTO SILICA NANOPARTICLES VIA SURFACE REVERSIBLE ADDITION-FRAGMENTATION CHAIN TRANSFER POLYMERIZATION" MACROMOLECULES, AMERICAN CHEMICAL SOCIETY, US LNKD-DOI:10.1021/MA050216R, vol. 38, no. 14, 12 July 2005 (2005-07-12) , pages 5929-5936, XP001234842 ISSN: 0024-9297**
- **JIANG K ET AL: "The unique dielectric behaviour of nanosilica epoxy composites" 7TH IEEE CONFERENCE ON NANOTECHNOLOGY, 2007 : IEEE-NANO 2007 ; HONG KONG, CHINA, 2 - 5 AUG. 2007, PISCATAWAY, NJ : IEEE SERVICE CENTER, PISCATAWAY, NJ, USA, 2 August 2007 (2007-08-02), pages 1101-1106, XP031307960 ISBN: 978-1-4244-0607-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 417 171 B1

## Description

Cross-Reference to Related Applications

This application claims priority under 35 U.S.C. §119 to U.S. Provisional Application No. 61/212,409, filed April 10, 2009, which is herein incorporated by reference in its entirety.

Government Rights Statement

The U.S. Government has a paid-up license in this invention and the right in limited circumstances to require the patent owner to license others on reasonable terms as provided for by the terms of Grant No. DMR-0642573 awarded by the National Science Foundation (NSF). The U.S. Government has certain rights in the invention.

BACKGROUND OF THE INVENTION

Technical Field

The invention relates generally to nanoparticle-filled polymer nanocomposites, and more particularly to the use of nanocomposites as electrical Insulation.

Background of the Invention

Nanoparticles are gaining considerable interest for a wide variety of applications in the electronic, chemical, optical and mechanical industries due to their unique physical and chemical properties. Nanoparticles can be made of a variety of materials and are typically defined as particles having a diameter of 1-100 nanometers. Recently, the modification of nanoparticles in order to change their physical and chemical properties has become an area of significant research. Such research includes a paper by Li et al which discloses modified nanoparticles having a diblock covalently attached to the nanoparticle. *See* Li, C and Benicewicz, BC, Synthesis of Well-Defined Polymer Brushes Grafted onto Silica Nanoparticles via Surface Reversible Addition-Fragmentation Chain Transfer Polymeriation, 2005, MACROMOLECULES, vol. 38, pgs 5929-5936.

Nanoparticles have been used to modify the properties of certain industrial polymers, such as epoxides. Epoxides are used in a wide variety of applications. Epoxy is a thermosetting epoxide polymer that cures (polymerizes and crosslinks)

when mixed with a curing agent or "hardener" and a catalyst. Some practitioners have used fillers, including nanoscale fillers, to try to improve the characteristics of epoxides. These composites tend to have trade offs versus a neat epoxy (an epoxy with no filler), for example, the use of a particular filler may increase the stiffness of the epoxy while concurrently decreasing its ductility and opacity.

Traditionally, motor insulation systems consist of mica tape impregnated with epoxy or polyester resins. These systems are robust and reliable, but have drawbacks such as generation of electrical discharges in voids between the mica and the matrix. These voids can be generated by delamination as a result of vibrations, thermal cycling etc.

Many kinds of micron-sized fillers have been added to epoxy resins to form composites with a better combination of mechanical, thermal and electrical properties. Use of soft particle fillers, such as rubber, is used to improve mechanical toughness of epoxies. However, as it enhances the toughness, it also reduces the stiffness of the epoxy. Use of rigid particle fillers is known to improve the stiffness of epoxy. The limitation of such rigid fillers is that they cause a decrease in ductility and opacity. Impregnation of porous structures (for example mica tape or paper) with micron-sized fillers is known to result in several problems, such as sedimentation of the particles, wear on the porous structure itself, and poor penetration into the porous structure. All these phenomena result in undesired effects on the mechanical properties of electrical insulation systems, whether manufactured by casting or an impregnation process.

SUMMARY OF THE INVENTION

Therefore one object of the present invention is to provide an electric insulation material having improved properties as compared to the properties of known materials described above.

The invention relates to an electric insulation material including modified nanoparticles dispersed in a polymer matrix wherein the modified nanoparticles include a nanoparticle and a diblock copolymer covalently attached to the nanoparticle, the diblock copolymer comprising an inner polymer exhibiting a glass transition temperature below room temperature attached to the nanoparticle and an outer polymer covalently linked to the inner polymer, wherein the outer polymer and the polymer matrix have the same chemical functionality wherein the material is adapted for use in electrical

machine windings, such as a motor or generator stator winding, or electrical bushings. The electrical insulation material can also be used in electric devices, such as a dry type transformer, instrument transformer, motor, generator, capacitor, switch gear, cable accessories or cables.

In one aspect the invention relates to using this electric insulation material in electrical machines or motors, or in bushings, transformers, surge arresters, circuit breakers or capacitors.

In another aspect, the invention relates to an electrical device comprising:

(a) an electrically conductive wire; and
(b) an electrical insulation material as described above, wherein said electrical insulation material radially surrounds said wire.

These and other objects, features and advantages of this invention will become apparent to those of skill in the art from the following detailed description of various aspects of the invention.

DETAILED DESCRIPTION OF THE INVENTION

The present invention provides for an electric insulation material incorporating modified nanoparticles and methods of making such material. The following description is intended to provide examples of the invention and to explain how various aspects of the invention relate to each other.

Methods of Synthesis

The present invention, in one aspect, includes for a method for preparing electric insulation, the method including the steps of (a) providing a plurality of modified nanoparticles, (b) dispersing the nanoparticles in a prepolymer resin to provide a prepolymer dispersion, (c) impregnating a porous substrate with the dispersion and (d) polymerizing the dispersion, wherein the modified nanoparticles are modified such that a diblock copolymer is attached to the nanoparticles, the block copolymer having an inner polymer with a glass transition temperature below room temperature proximal to the nanoparticle and a resin-compatible outer polymer distal to the nanoparticle. The modified nanoparticles having a diblock copolymer structure provide the electric insulation with improved fracture toughness and fatigue properties as compared to previously known electric insulation materials.

In another aspect, the present invention relates to a method for preparing electric insulation, the method including the steps of (a) providing a plurality of modified nanoparticles, (b) dispersing the nanoparticles in a polymer matrix to provide a nanocomposite, wherein the modified nanoparticles are modified such that a block copolymer is covalently attached to the nanoparticle, the block copolymer having an inner polymer with a glass transition temperature below room temperature proximal to the nanoparticle and a matrix-compatible outer polymer distal to the nanoparticle. The electric insulation may be adapted for use in electrical machine windings, cables and electrical bushings. For illustrative purposes, the electric insulation may be used in motors and electrical machine windings, such as a motor or generator stator winding, or electrical bushings. For further illustration, the electrical insulation material can also be used in electric devices, such as a dry type transformer, instrument transformer, motor, generator, capacitor, swich gear, surge arresters, corcuit breakers, cable accessories or cables. The modified nanoparticles having a diblock copolymer structure provide the electric insulation with improved fracture toughness and fatigue properties as compared to previously known electric insulation materials.

Suitable nanoparticles may be made from any desired material, without limitation for use in any aspect of the invention. By way of example, nanoparticles suitable for use in the invention may be made from any of the following, including, but not limited to, inorganic material, for example, metal oxides, such as, but not limited to, silica, alumina, aluminum oxide, titanium oxide, tin oxide, or semiconducing materials. The particles may also be composed of organic material, such as semiconductor polymer particles, rubber particles, or another organic material suitable for a particular application. The terms "rubber' and "rubbery" refer to polymers whose glass transition temperature is below 23°C. For the purposes of this disclosure, the term "nanoparticle" is used in a broad sense, though for illustrative purposes only, some typical attributes of nanoparticles suitable for use in this invention are a particle size of between 1-100 nanometers and, with regards to particle shape, an aspect ratio of between 1 and 1,000. For example, a depiction of such a modified nanoparticle would be:

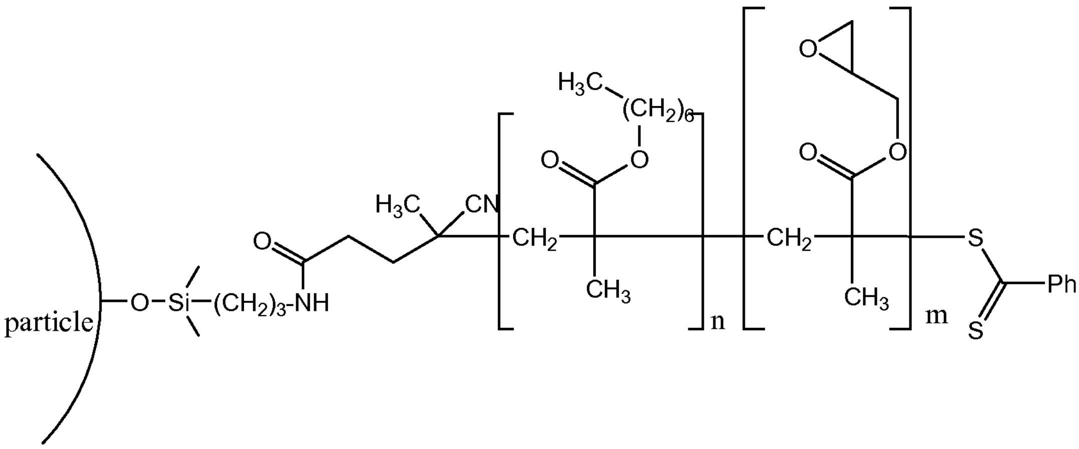

Attachment of the diblock copolymer to the nanoparticle can be achieved in any reaction such that a covalent bond between the nanoparticle and the diblock copolymer results. One non-limiting example of an acceptable attachment reaction is reversible addition-fragmentation chain transfer (RAFT) polymerization. RAFT polymerization reactions are performed under mild conditions, typically do not require a catalyst, and are applicable to a wide range of monomers. Monomers suitable for use in the practice of the invention include, but are not limited to: acrylates, methacrylates, phenylacetylene, and styrene. Although several approaches employing RAFT techniques are within the scope of the invention, an example of one particular RAFT reaction is surface-initiated RAFT. Surface-initiated RAFT is particularly attractive due to its ability to provide precise control over the structure of the grafted polymer chains and provide significant control over the graft density of the polymer chains. RAFT can be used to attach a block polymer to the nanoparticle and a second block polymer can be attached via any suitable chemical reaction such that the first block polymer is covalently bonded to the second block polymer.

Click reactions are one suitable class of reactions that may be used to attach suitable matrix or resin compatibility to a polymer layer. While any form of click chemistry is within the scope of the invention, an example is the use of azide-alkyne click chemistry, with a more specific example being the copper catalyzed variant of the Huisgen dipolar cycloaddition reaction. There are two major methods for producing functionalized polymers using click chemistry and both methods are included in the scope of the invention without limiting the invention to those two methods. The first major method includes use of a RAFT agent containing an azide or alkyne moiety to mediate the polymerization of various monomers. The resulting polymers contain terminal alkynyl or azido functionalities, which are then used in click reactions with functional azides or alkynes, respectively. This method can also be used to synthesize block copolymers by cojoining azide and alkyne end-functionalized polymer pairs. The second method employs a polymer with pendant alkynyl or azido groups synthesized via RAFT polymerization. These polymers are then side-functionalized via click-reactions. Block copolymers can be synthesized using this method as well.

In other aspects of the invention, block copolymers may be synthesized prior to attachment to the nanoparticle. Block copolymers suitable for use in the practice of this invention include but are not limited to: poly[(6-azidohexyl methacrylate)$_n$-b-(styrene)$_m$] and poly[(hexyl methacrylate)$_n$-b-(glycidyl methacrylate)$_m$].

In certain embodiments, wherein the inner block polymer has a triazole side chain, the triazole side chain can include a polyaniline or a polyolefin. In other embodiments, wherein the outer block polymer has a triazole side chain, the triazole can include a glycidyl ether, an ester, an aliphatic hydrocarbon, an aromatic hydrocarbon, a phenol, an amide, an isocyanate, or a nitrile group.

The size ranges of the individual block polymers and overall length of the diblock copolymer can vary within the scope of the invention, as desired, in an application-specific manner. As a non-limiting example, suitable lengths for the overall diblock copolymer can range from 2Kg/mole to 200,000 Kg/mole. Additionally, each of the inner block polymer and outer block polymer can be of a length of 1Kg/mole to 199,000 Kg/mole. Typically, the inner block polymer will have a length between 10,000 Kg/mole and 50,000 Kg/mole and the outer block polymer will have a length of up to 190,000 Kg/mole. Techniques such as RAFT allow for precise tailoring of the lengths of the block polymers.

The prepolymer resin or polymer matrix may be any prepolymer resin or polymer matrix that is suitable for a particular application. By way of example, suitable prepolymer resins or polymer matrices include, but are not limited to, a rubber, a thermoplastic polymer, a thermosetting polymer, or a thermoplastic elastomer. In certain embodiments, the prepolymer resin may be an epoxide, a polyolefin, ethylene propylene rubber, ethylene propylene diene monomer rubber, or co-polymers of ethylene with at least one $C_3$ to $C_{20}$ alpha-olefin or optionally at least one $C_3$ to $C_{20}$ polyene.

Dispersion of the modified nanoparticles in a polymer matrix can occur through any appropriate methodology known to those skilled in the art. Dispersion of the modified nanoparticles into the polymer matrix can occur in several

ways. One non-limiting example includes melting or dissolving a polymer of interest, subsequently adding the modified nanoparticles to the melted polymer, mixing the particles to achieve desired dispersion, and subsequently hardening the polymer, for example, by allowing it to cool if melted. This technique may be used with thermoplastics. A second non-limiting exemplary method to disburse the modified nanoparticles in a polymer matrix is to add the modified nanoparticles to a prepolymer resin, to provide a polymer dispersion, impregnating a porous substrate with the dispersion, and then polymerizing the dispersion. This technique may be used with thermosets. Additional non-limiting examples include impregnation through the use of high speed mixing, such as a high shear mixing, through the use of a carrier liquid, or through the use of a supercritical fluid. Regardless of the specific method of dispersion, the procedure should be carried out such that agglomeration of the modified nanoparticles is minimized and such that the modified nanoparticles are substantially homogeneously distributed in the polymer matrix.

Impregnation of the porous substrate can be achieved through various methodologies including casting, dipping, vacuum impregnation or any other application-appropriate process. Impregnation is to be distinguished from surface coating, in which the interior voids of a porous substrate are not filled.

Any application-appropriate porous substrate, including a porous fibrous substrate, is suitable for use as electric insulation may be used within the scope of this invention. The following examples may be used in certain aspects of the invention with no intention to be bound to the specific examples listed mica, fibrous substrates such as cellulose fibers, glass fibers, polymeric fibers, and mixtures thereof. Additionally, the porous fibrous substrate can have several forms including paper, pressboard, laminate, tape, weave, or sheets. Porous substrates that are flexible allow themselves to conform to non-planar electrical conductors, such as wires. Substrates useful in electrical insulation will commonly have dielectric constants (measured by ASTM test methods) at $10^6$ cycles greater than 2.0.

Polymerization of the impregnated porous substrate may occur through any standard methodology known in the art for polymerizing the particular prepolymeric resin used in a specific application of the invention.

The term "compatible" as used herein means that the outer polymer is chemically similar enough to the polymer matrix that the dispersion of the nanoparticle meets at least one of the following criteria: a) the largest agglomerates of modified nanoparticles in the polymer matrix after dispersion and mixing are 500 nm in diameter and at least 50% of the agglomerates have a diameter less than 250 nanometers, b) the largest agglomerates of modified nanoparticles in the polymer matrix after dispersion and mixing are 100 nanometers in diameter and no more than 50% of the agglomerates are 100 nanometers in diameter, or c) at least 50% of the modified nanoparticles are individually dispersed in the polymer matrix after dispersion and mixing.

## Electric Insulation Material

Another aspect of the invention is an electric insulation material that includes a modified nanoparticle, a porous substrate and a polymer matrix, wherein the modified nanoparticle includes a nanoparticle and a diblock copolymer covalently attached to the nanoparticle, the diblock copolymer including an inner block polymer of molecular weight greater than 1000 and a glass transition temperature below room temperature attached to the nanoparticle and an outer block polymer of molecular weight greater than 1000 covalently linked to the inner block polymer, wherein the outer block polymer and polymer matrix both possess the same chemical functionality. The modified nanoparticles having a diblock copolymer structure provide the electric insulation with improved fracture toughness and fatigue properties as compared to previously known electric insulation materials.

Yet another aspect of the invention is an electric insulation material including modified nanoparticles dispersed in a polymer matrix wherein the modified nanoparticles include a nanoparticle and a diblock copolymer covalently attached to the nanoparticle; the block copolymer comprising an inner polymer exhibiting a glass transition temperature below room temperature attached to the nanoparticle and an outer polymer covalently linked to the inner polymer, wherein the outer polymer and the polymer matrix have compatible functionality wherein the electrical insulation material is adapted for use in electrical machine windings, cables and bushings. The modified nanoparticles having a diblock copolymer structure provide the electric insulation with improved fracture toughness and fatigue properties as compared to previously known electric insulation materials.

Yet another aspect of the invention is an electrical device including an electrically conductive wire and an electrical insulation material according to any of the aspects discussed above, wherein the electrical insulation material radially surrounds the wire.

Modified nanoparticles suitable for use in these aspects of the invention include all of the modified nanoparticles discussed above or other suitable application-specific nanoparticles. The amount of modified nanoparticle present in a given embodiment of the invention, relative to the amount of polymeric matrix present, can vary as desired in an application-specific manner. A non-limiting example of amounts of modified nanoparticle typically present in various embodiments of the invention is a range where the modified nanoparticle volume fraction is between about 0.1 percent and about 25 percent by volume. Other suitable non-limiting volume fractions for use in the invention include 0.1 percent to 10 percent, 0.1 percent to 5 percent, 0.1 percent to 1 percent, and 0.05 percent to 2 percent.

Any suitable polymeric matrix can be used according to the invention, as desired. Non-limiting examples include: a rubber, a thermoplastic polymer, a thermosetting polymer, or a thermoplastic elastomer. In certain embodiments, the prepolymer resin or polymer matrix may be an epoxide, a polyolefin, ethylene propylene rubber, ethylene propylene diene monomer rubber, or co-polymers of ethylene with at least one $C_3$ to $C_{20}$ alpha-olefin or optionally at least one $C_3$ to $C_{20}$ polyene.

Any application-appropriate porous substrate, including a porous fibrous substrate, suitable for use as electric insulation may be used within the scope of this aspect of the invention. The following examples may be used in certain aspects of the invention with no intention to be bound to the specific examples listed mica, fibrous substrates such as cellulose fibers, glass fibers, polymeric fibers, and mixtures thereof. Additionally, the porous fibrous substrate can have several forms including paper, pressboard, laminate, tape, weave, or sheets.

The term "chemical functionality" is interchangeable with "functional group" and would be readily understood by the person of skill in the art. The term is used in its normal sense, as defined in the Dictionary of Science and Technology (Academic Press 1992): "In a carbon-hydrogen molecule [a functional group is] an atom or group of atoms replacing a hydrogen atom; [it may also be] a reactive group having specific properties, such as a double bond." In the context used herein to describe the relationship between the outer block polymer and the polymeric matrix, for example, the matrix may arise from polymerization of an epoxide, and the outer block polymer will then possess the epoxide functionality in its side chain. In similar fashion, the resin/matrix may be a polyester, and the outer block polymer will possess the carboxylic ester functionality in its side chain; or the resin/matrix may be a polyolefin, and the outer block polymer will possess hydrocarbon functionality in its side chain.

In the claimed invention, the outer block polymer and the polymeric matrix will have identical functionalities, for example, when they are each of the same chemical class. Non-limiting examples of such chemical classes that are within the scope of the invention include, but are not limited to an epoxide, a polyolefin, ethylene propylene rubber, ethylene propylene diene monomer rubber, or co-polymers of ethylene with at least one $C_3$ to $C_{20}$ alpha-olefin or optionally at least one $C_3$ to $C_{20}$ polyene.

Aspects of the invention can have varying graft densities of copolymers attached to the nanoparticles. Graft densities within the scope of aspects of the invention include, but are not limited to, 0.01 to 1.0 chains/$nm^2$ as measured by ultraviolet-visible-absorption spectroscopy.

The electric insulation material of one aspect of the present invention is pliable and can be used to conform to any desired application including, but not limited to, electrical machine windings such as motor or generator stator winding or electrical bushings, or as used in electrical devices including, but not limited to, a dry tape transformer, instrument transformer, generator, switch gear, cable accessories or cables.

Example

Explained herein is an embodiment of the invention describing a modified nanoparticle-filled electrical insulation material. The invention may, however, be embodied in many different forms and should not be construed as being limited to the exemplary embodiments set forth herein; rather, these embodiments are provided so that this disclosure will be thorough and complete, and will fully convey the concept of the invention to those skilled in the art.

*Preparation of Polymer-Coated Silica Nanoparticles*

In this example, reversible addition-fragmentation chain transfer (RAFT) polymerization was used to graft polymers on $SiO_2$ nanoparticles (ORGANOSILICASOL™ colloidal silica in Methyl isobutyl ketone (MIBK) from Nissan Chemical). 4-Cyanopentanoic acid dithiobenzoate (CPDB) served as the RAFT reaction agent.

The nanoparticles were modified using a living free radical polymerization method to create a rubbery inner block (molecular weight 10Kglmole ) and an outer block with epoxy compatible groups (molecular weight 65Kg/mole), and a graft density of 0.2 chains/$nm^2$. An example chemistry is shown in the schematic below:

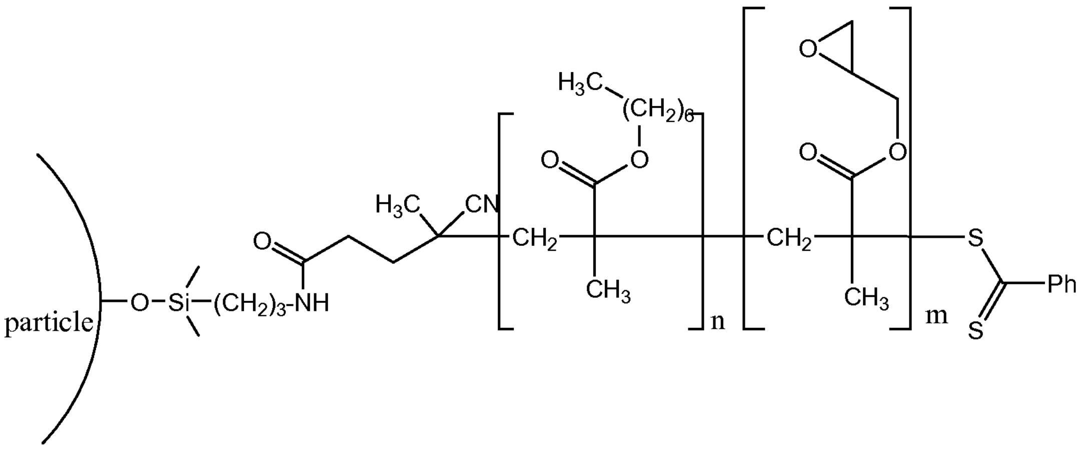

*Synthesis of 4-Cyanopentanoic acid dithiobenzoate (CPDB)*

Twenty milliliters (mL) of phenyl magnesium bromide (3 M solution in ethyl ether) was added to a 250-mL, round-bottom flask , the phenyl magnesium bromide which was diluted to 100 mL with anhydrous tetrahydrofuran (THF). Carbon disulfide (4.6 g) was added dropwise, and the reaction was stirred for 2 hours at room temperature. The mixture was diluted with 100 mL of diethyl ether and poured into 200 mL of ice-cold hydrochloric acid (1 M). The organic layer was separated and extracted with 250 mL of cold sodium hydroxide solution (1 M) to yield an aqueous solution of sodium dithiobenzoate. The sodium dithiobenzoate solution was transferred to a 1000 mL round bottom flask equipped with a magnetic stir bar. An excess of aqueous potassium ferricyanide solution (300 mL) was added dropwise to the sodium dithiobenzoate via an addition funnel over a period of 1 hour under vigorous stirring. The reddish-pink precipitate formed was collected by filtration and washed with distilled water until the filtrate became colorless. The solid was dried under vacuum at room temperature overnight. Yield of di(thiobenzoyl) disulfide was 5.5 g (60%). Ethyl acetate (100 mL), 4,4'-azobis(4-cyanopentanoic acid) (7 g, 25 mmol), and di(thiobenzoyl) disulfide (5.5 g, 18 mmol), were added to a 250 mL round-bottomed flask. The reaction solution was heated at reflux for 18 hours. After removal of solvent and silica gel column chromatography (3:2 mixture of hexane and ethyl acetate), the product was obtained as a red solid (yield: 7.5 g, 75%). mp: 78°C (capillary uncorrected).

*Synthesis of activated CPDB*

CPDB (1.40g), mercaptothioazoline (0.596g) and dicyclohexylcarbodiimide (DCC) (1.24g) were dissolved in 20mL dichloromethane. Dimethylaminopyridine (DMAP) (61mg) was added slowly to the solution which was stirred at room temperature for 6-8 hours. The solution was filtered to remove the salt. After removal of solvent and silica gel column chromatography (5:4 mixture of hexane and ethyl acetate), activated CPDB was obtained as a red oil (1.57g, 83% yield).

*Synthesis of CPDB anchored silica nanoparticles*

A solution (5 g) of colloidal silica particles (30 wt% in MIBK) and was added to a two necked round-bottom flask and diluted with 50 mL of THF. To this was added 3-aminopropyldimethylethoxysilane (0.25 mL), and the mixture was refluxed at 75°C for 12-14 hours under nitrogen protection. The reaction was then cooled to room temperature and precipitated in large amount of hexanes. The particles were then recovered by centrifugation at 3000 rpm for 8 minutes and then dispersed in THF using sonication and precipitated in hexanes again. The amino functionalized particles were then dispersed in 40 mL of THF for further reaction.

A THF solution of the amino functionalized silica nanoparticles (40 mL, 1.6 g) was added dropwise to a THF solution (30 mL) of activated CPDB (0.5 g) at room temperature. After complete addition, the solution was stirred overnight. The reaction mixture was precipitated into a large amount of 4:1 mixture of cyclohexane and ethyl ether (2500 mL). The particles were recovered by centrifugation at 3000 rpm for 8 minutes. The particles were redispersed in 30 mL THF and precipitated in 4:1 mixture of cyclohexane and ethyl ether. This dissolution-precipitation procedure was repeated 2 more times until the supernatant layer after centrifugation was colorless. The red CPDB anchored silica nanoparticles were dried at room temperature and analyzed using Ultra Violet analysis to determine the chain density.

*Graft polymerization of block copolymer brush from CPDB anchored colloidal silica nanoparticles.*

A solution of hexyl methacrylate (40 mL), CPDB anchored silica nanoparticles (350 mg, 171.8 μmol/g), azobisisobutyronitrile (AIBN) (1 mg), and THF (40 mL) was prepared in a dried Schlenk tube. The mixture was degassed by three freeze-pump-thaw cycles, back filled with nitrogen, and then placed in an oil bath at 60°C. After 3.5 hours, 12 mL of glycidyl methacrylate was added to the Schlenk tube and the reaction was allowed to proceed for an additional 5 hours. The polymerization solution was quenched in ice water and poured into cold methanol to precipitate the polymer grafted silica nanoparticles. The polymer chains were cleaved by treating a small amount of nanoparticles with hydrofluoric acid. The molecular weight of the first homopolymer block was either 10kg/mol or 30 kg/mol, depending upon experimental group, and the molecular weight of the outer block containing a mixture of hexyl methacrylate and glycidyl methacrylate was 30kg/mol, 37kg/mol, or 65 kg/mol as analyzed by Gel Permeation Chromatography. The chemistry and graft density of the tested polymer-$SiO_2$ nanoparticle composites is summarized in Table 1.

Table 1. Chemistry and Graft Density of Nanoparrticle Composites

| **Particle ID** | **Molecular weight ratio of rubbery block/epoxy compatible block** | **Graft density (chains/nm$^2$)** |
|---|---|---|
| 10k+47k-$SiO_2$ | 10kg/mol: 37kg/mol | 0.21 |
| 30k+60k-$SiO_2$ | 30kg/mol: 30kg/mol | 0.21 |
| 30k+95k-$SiO_2$ | 30kg/mol: 65kg/mol | 0.71 |

*Preparation of Polymer-Coated Silica Nanoparticles Filled Epoxy Nanocomposite*

The Huntsman Araldite® epoxy system was used as the thermosetting matrix polymer. The system includes (i) Araldite F - bisphenol A liquid epoxy resin; (ii) HY905 - acid anhydride hardener (with diamine groups) and (iii) DY062 - amine catalyst.

The nanoparticles prepared above were placed in a $CH_2Cl_2$ solvent (the concentration of the particle cores in $CH_2Cl_2$ was approximately 1mg/mL); Epoxy resin was added to the solution to make a master batch (MB) containing 1% by weight of modified nanoparticles. The MB was mixed with an equal weight of alumina balls (1/8" in D) in a Hauschid speed mixer according to the following sequence of mixing speeds and times: 20 seconds at 500 rpm, 20 seconds at 1000 rpm, 30 seconds at 2000 rpm and 60 seconds at 3500 rpm. After one sequence of mixing, the MB was mixed for 3 one minute intervals at 3500 rpm to cool the MB in ice. The calculated amount of epoxy resin for a targeted loading of particles in the nanocomposite was added to the MB and mixed in the Hauschid speed mixer for one sequence of mixing. The solvent in the mixture was evaporated in a fume hood overnight; HY905 hardener and DY062 catalyst were added to the mixture to make a sample batch (SB). The SB was cured in a dog bone sample silicone mold at 80 degrees C for 10 hours and 135 degrees C for 10 hours.

The calculation of the amount of epoxy resin to put in the MB to make an x wt% of particle cores in the polymer-coated $SiO_2$ nanoparticles filled epoxy nanocomposite is shown below:

$$W_{particle\ cores}/W_{EP}=x\%/(1-(1+p)x\%)$$

where, $W_{particle\ cores}$ and $W_{EP}$ denote for the weight of the $SiO_2$ nanoparticle cores and epoxy matrix, respectively, and $p$ is the weight ratio of the grafted polymer to the particle cores for the grafted $SiO_2$.

The $SiO_2$ nanoparticles had an averaged diameter (D) of 15 nm. The average surface area (A) of the $SiO_2$ nanoparticles was 706.9 nm$^2$.

*Tensile Testing of Polymer-Coated Silica Nanoparticle-Filled Epoxy Nanocomposite*

The following polymer-$SiO_2$/epoxy nanocomposites were tested for improved strain-to-break properties: a 2% by weight 10k+47k-$SiO_2$/epoxy nanocomposite, a 2% by weight 30k+60k-$SiO_2$/epoxy nanocomposite, a 0.1% by weight 30k+95k-$SiO_2$/epoxy nanocomposite. Neat epoxy (having no filler) was used as a control group.

The tensile test was conducted using an Instron 4201. Dog bone specimens of the neat epoxy and polymer-$SiO_2$/epoxy nanocomposites with thickness and width of 3mm by 3mm at the gauge section were used for the tensile test. The specimen was loaded at a strain rate of 0.1mm/min until the failure happened. Data from the tensile test is summarized in Table 2. The modified nanoparticles exhibit improved fatigue properties.

Table 2. Mechanical Properties of Different Epoxy Systems.

| Sample | Ultimate Tensile Stress (MPa) | Strain to break (%) | Increased Strain to break by | Modulus (GPa) |
|---|---|---|---|---|
| Neat epoxy | 83.7±0.4 | 7.36±1.15 | - | 3.3±0.1 |
| 2wt% 10k+47k-$SiO_2$/ epoxy | 79.7±0.6 | 9.06±1.04 | 23% | 3.2±0.1 |
| 2wt% 30k+60k-$SiO_2$/ epoxy | 79.1±0.1 | 9.18±2.02 | 25% | 3.3±0.1 |
| 0.1wt% 30k+95k-$SiO_2$/ epoxy | 82.0±0.1 | 14.2±2.44 | 93% | 3.3±0.2 |
| MPa = Megapascal<br>GPa = Gigapascal | | | | |

The electric insulation material disclosed can be used in any desired application. For the purposes of illustration only, some example applications of aspects of this invention include, but are not limited to, bushings, transformers, surge arrestors, circuit breakers, or capacitors.

While several aspects of the present invention have been described and depicted herein, alternative aspects may be effected by those skilled in the art to accomplish the same objectives.

## Claims

1. An electric insulation material comprising modified nanoparticles dispersed in a polymer matrix
wherein said modified nanoparticles comprise a nanoparticle and a diblock copolymer covalently attached to the nanoparticle;
said diblock copolymer comprising an inner polymer exhibiting a glass transition temperature below room temperature attached to the nanoparticle and an outer polymer covalently linked to the inner polymer, wherein said outer polymer possesses the same chemical functionality as said polymer matrix and
wherein said material is adapted for use in electrical machine windings, cables and bushings.

2. An electric insulation material according to claim 1, wherein the polymer matrix is a thermoplastic.

3. An electric insulation material according to claim 1, wherein the polymer matrix is a thermoset.

4. An electric insulation material according to any of claims 1-3, wherein the nanoparticles are selected from the group consisting of: alumina, silica, titanium oxide, tin oxide, semiconducting and rubbery polymer particles.

5. An electric insulation material according to any of claims 1, 3, or 4, wherein the outer polymer carries epoxy functionality.

6. An electric insulation material according to any of claims 1 or 3-5, wherein the polymer matrix is an epoxy.

7. An electric insulation material according to any of claims 1-6, wherein the polymer matrix comprises 0.05-25 vol% of modified nanoparticles.

8. An electric insulation material according to any of claims 1-7, wherein the graft density of the chains of the block copolymer to the nanoparticles is from 0.01 to 1 chains/$nm^2$.

9. An electric insulation material according to any of claims 1-8, comprising a porous fibrous substrate impregnated with the nanocomposite comprising modified nanoparticles dispersed in a polymer matrix.

10. An electric insulation material according to claim 9, wherein the porous fibrous substrate is selected from the group consisting of mica, cellulose fibers, glass fibers, polymeric fibers, and mixtures thereof.

**11.** An electric insulation material according to any of claims 9 or 10, wherein the porous fibrous substrate is in the form of paper, pressboard, laminate, tape, weave or sheets.

**12.** Use of an electric insulation material according to any of claims 1-11 in electrical machines or motors, or in bushings, transformers, surge arresters, circuit breakers or capacitors.

**13.** An electrical device comprising:

(a) an electrically conductive wire; and
(b) an electrical insulation material according to any of claims 1-12, wherein said electrical insulation material radially surrounds said wire.

**Patentansprüche**

**1.** Elektrisches Isoliermaterial, umfassend modifizierte Nanopartikel, die in einer Polymermatrix dispergiert sind, wobei die modifizierten Nanopartikel ein Nanopartikel und ein Diblockcopolymer umfassen, das kovalent an das Nanopartikel gebunden ist;
wobei das Diblockcopolymer ein inneres Polymer, das eine Glasübergangstemperatur unter Raumtemperatur aufweist, gebunden an das Nanopartikel, und ein äußeres Polymer umfasst, das kovalent mit dem inneren Polymer verknüpft ist, wobei das äußere Polymer dieselbe chemische Funktionalität wie die Polymermatrix aufweist, und wobei das Material zur Verwendung in Wicklungen für Elektromaschinen, Kabeln und Durchführungen vorgesehen ist.

**2.** Elektrisches Isoliermaterial nach Anspruch 1, wobei die Polymermatrix ein Thermoplast ist.

**3.** Elektrisches Isoliermaterial nach Anspruch 1, wobei die Polymermatrix ein Duroplast ist.

**4.** Elektrisches Isoliermaterial nach einem der Ansprüche 1 bis 3, wobei die Nanopartikel ausgewählt sind aus der Gruppe bestehend aus Aluminiumoxid, Siliciumdioxid, Titanoxid, Zinnoxid, halbleitenden und kautschukartigen Polymerpartikeln.

**5.** Elektrisches Isoliermaterial nach einem der Ansprüche 1, 3 oder 4, wobei das äußere Polymer Epoxyfunktionalität trägt.

**6.** Elektrisches Isoliermaterial nach einem der Ansprüche 1 oder 3 bis 5, wobei die Polymermatrix ein Epoxid ist.

**7.** Elektrisches Isoliermaterial nach einem der Ansprüche 1 bis 6, wobei die Polymermatrix 0,05 bis 25 Vol.% modifizierte Nanopartikel umfasst.

**8.** Elektrisches Isoliermaterial nach einem der Ansprüche 1 bis 7, wobei die Pfropfdichte der Ketten des Blockcopolymers zu den Nanopartikeln 0,01 bis 1 Kette/$nm^2$ beträgt.

**9.** Elektrisches Isoliermaterial nach einem der Ansprüche 1 bis 8, umfassend ein poröses faseriges Substrat, das mit dem Nanoverbundwerkstoff imprägniert ist, der modifizierte Nanopartikel umfasst, die in einer Polymermatrix dispergiert sind.

**10.** Elektrisches Isoliermaterial nach Anspruch 9, wobei das poröse faserige Substrat ausgewählt ist aus der Gruppe bestehend aus Glimmer, Cellulosefasern, Glasfasern, polymeren Fasern und Mischungen davon.

**11.** Elektrisches Isoliermaterial nach einem der Ansprüche 9 oder 10, wobei das poröse faserige Substrat in Form von Papier, Pressspan, Laminat, Band, Webmaterial oder Lagen vorliegt.

**12.** Verwendung eines elektrischen Isoliermaterials nach einem der Ansprüche 1 bis 11 in elektrischen Maschinen oder Motoren oder in Durchführungen, Transformatoren, Überspannungsableitern, Stromkreisunterbrechern oder Kondensatoren.

**13.** Elektrische Vorrichtung, umfassend:

(a) einen elektrisch leitenden Draht und
(b) ein elektrisches Isoliermaterial gemäß einem der Ansprüche 1 bis 12, wobei das elektrische Isoliermaterial den Draht radial umgibt.

## Revendications

1. Matériau d'isolation électrique comprenant des nanoparticules modifiées dispersées dans une matrice de polymère dans lequel lesdites nanoparticules modifiées comprennent une nanoparticule et un copolymère dibloc attaché de façon covalente à la nanoparticule ;
ledit copolymère dibloc comprenant un polymère interne présentant une température de transition vitreuse au-dessous de la température ambiante attaché à la nanoparticule et un polymère externe lié de façon covalente au polymère interne, ledit polymère externe possédant la même fonctionnalité chimique que ladite matrice de polymère, et
ledit matériau étant adapté à l'utilisation dans des bobinages de machines électriques, des câbles et des traversées de transformateurs.

2. Matériau d'isolation électrique selon la revendication 1, dans lequel la matrice de polymère est un thermoplastique.

3. Matériau d'isolation électrique selon la revendication 1, dans lequel la matrice de polymère est un plastique thermodurcissable.

4. Matériau d'isolation électrique selon l'une quelconque des revendications 1-3, dans lequel les nanoparticules sont choisies dans le groupe constitué par : les particules d'alumine, de silice, d'oxyde de titane, d'oxyde d'étain, semi-conductrices et de polymère caoutchouteux.

5. Matériau d'isolation électrique selon l'une quelconque des revendications 1, 3 ou 4, dans lequel le polymère externe porte une fonctionnalité époxy.

6. Matériau d'isolation électrique selon l'une quelconque des revendications 1 ou 3-5, dans lequel la matrice de polymère est une résine époxy.

7. Matériau d'isolation électrique selon l'une quelconque des revendications 1-6, dans lequel la matrice de polymère comprend 0,05-25 % en volume de nanoparticules modifiées.

8. Matériau d'isolation électrique selon l'une quelconque des revendications 1-7, dans lequel la densité de greffage des chaînes du copolymère séquencé aux nanoparticules est de 0,01 à 1 chaîne/$nm^2$.

9. Matériau d'isolation électrique selon l'une quelconque des revendications 1-8, comprenant un substrat fibreux poreux imprégné du nanocomposite comprenant des nanoparticules modifiées dispersées dans une matrice de polymère.

10. Matériau d'isolation électrique selon la revendication 9, dans lequel le substrat fibreux poreux est choisi dans le groupe constitué par le mica, les fibres de cellulose, les fibres de verre, les fibres polymères et les mélanges de ceux-ci.

11. Matériau d'isolation électrique selon l'une quelconque des revendications 9 ou 10, dans lequel le substrat fibreux poreux est sous la forme de papier, de carton comprimé, de stratifié, de ruban, de tissage ou de feuilles.

12. Utilisation d'un matériau d'isolation électrique selon l'une quelconque des revendications 1-11 dans des machines ou moteurs électriques, ou dans des traversées de transformateurs, des transformateurs, des parafoudres, des disjoncteurs ou des condensateurs.

13. Dispositif électrique comprenant :

(a) un fil électriquement conducteur ; et
(b) un matériau d'isolation électrique selon l'une quelconque des revendications 1-12,

dans lequel ledit matériau d'isolation électrique entoure radialement ledit fil.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61212409 A


### Non-patent literature cited in the description


- **LI, C ; BENICEWICZ, BC.** Synthesis of Well-Defined Polymer Brushes Grafted onto Silica Nanoparticles via Surface Reversible Addition-Fragmentation Chain Transfer Polymeriation. *MACROMOLECULES,* 2005, vol. 38, 5929-5936
- Dictionary of Science and Technology. Academic Press, 1992